Europäisches Patentamt

European Patent Office

Office européen des brevets

(19)

(11) **EP 1 473 586 B1**

(12) **EUROPEAN PATENT SPECIFICATION**

(45) Date of publication and mention
of the grant of the patent:
**14.09.2005 Bulletin 2005/37**

(51) Int Cl.7: **G02F 1/19**, G02F 1/13357B

(21) Application number: **04016812.2**

(22) Date of filing: **12.05.2000**

(54) **Light modulator controlled by surface plasmon waves**

Lichtmodulator der durch Oberflächenplasmonen gesteuert wird

Modulateur de lumiere à commande par onde plasmon de surface

(84) Designated Contracting States:
**FR GB**

(30) Priority: **14.05.1999 JP 13358599**

(43) Date of publication of application:
**03.11.2004 Bulletin 2004/45**

(62) Document number(s) of the earlier application(s) in
accordance with Art. 76 EPC:
**00304024.3 / 1 054 290**

(73) Proprietor: **NEC CORPORATION
Tokyo (JP)**

(72) Inventor: **Takatori, Ken-ichi
Tokyo (JP)**

(74) Representative: **W.P. Thompson & Co.
55 Drury Lane
London WC2B 5SQ (GB)**

(56) References cited:
**EP-A- 0 395 986          US-A- 5 221 982**

• **YU WANG: "Scrolling color projection display
using surface plasmon tunable filters"
PROJECTION DISPLAYS IV, SAN JOSE, CA,
USA, 27-29 JAN. 1998, vol. 3296, January 1998
(1998-01), pages 149-153, XP002263459
Proceedings of the SPIE - The International
Society for Optical Engineering, 1998, SPIE-Int.
Soc. Opt. Eng, USA ISSN: 0277-786X**
• **YU WANG: "Surface plasmon tunable filters and
flat panel display device" FLAT PANEL DISPLAY
TECHNOLOGY AND DISPLAY METROLOGY,
SAN JOSE, CA, USA, 27-29 JAN. 1999, vol. 3636,
January 1999 (1999-01), pages 69-72,
XP002263460 Proceedings of the SPIE - The
International Society for Optical Engineering,
1999, SPIE-Int. Soc. Opt. Eng, USA ISSN:
0277-786X**

**Description**

The present invention relates to a light modulator. A light modulator utilizing surface plasmon, a light source and a display apparatus using the light modulator, and a method for driving the light modulator will be described below, by way of example in illustration of the invention.

A field sequential display apparatus using a colour filter disc has previously been proposed in a publication entitled "Colour Liquid Crystal Display" written and edited by Shunsuke Kobayashi and published on Dec. 14, 1990, at page 117. In this apparatus, a colour filter disc coloured in red, green, and blue, i.e., the three primary colours of light, is placed in front of a monochrome cathode ray tube, and rotated in synchronism with a display to enable a colour display to be made. Similarly, a colour display is also made possible by placing the colour filter disc in front of a white light source, combined with a black-and-white shutter type display device.

Further, an apparatus of another system was described on pages 120 and 121 of the above-mentioned publication "Color Liquid Crystal Display" for performing a field sequential colour display in which there were combined two high-speed liquid crystal display devices referred to π cells, and a total of three sheet polarizers and colour sheet polarizers placed in front of a monochrome CRT(cathode ray tube).

Further, there was also proposed the use of a CRT, LED (light emitting diode), or cold cathode fluorescent tube as a backlight, and a liquid crystal display as a black shutter on pages 122 and 123 of the above-mentioned publication "Color Liquid Crystal Display". With this apparatus, the backlights of the respective three primary colours were caused to flash alternately. An example was described as a field sequential full colour LCD in the July issue, at pp.11-16, (1998) of "Monthly Published Display", In this example, the cold cathode fluorescence tube backlight, which is the illumination light commonly used in liquid crystal display apparatus, was temporarily switched between red, green, and blue.

In recent years, there has been proposed a light modulator utilizing an electromagnetic wave supported by the interface between a metal and an insulator (a dielectric material), referred to as a surface plasmon wave (SPW) device, a display apparatus which permits colour display by utilizing this light modulator, and a light source thereof as a display apparatus, whereby a colour display is implemented without using the foregoing colour filter and colour light source. Conductors, such as metals, which can be defined as a gas of electrons in electrostatic equilibrium inside a continuum of positive fixed charges, can be considered as a "condensed" electron plasma with an electron density approximately equal to $10^{23}$ electrons per $cm^3$, in which a longitudinal wave, referred to as a surface plasma oscillation, is able to exist in addition to a volume plasma oscillation, which is a normal plasma oscillation. The electric field due to the surface plasma oscillation has a periodic wave form in a direction parallel to the metal surface, while having the form of an evanescent wave which evanesces exponentially in a direction perpendicular to the metal surface. Plasmons are quanta associated with the plasma oscillation (collective wave excitation of a conductive electronic gas) in the metal. Because of the high electron density, quantum effects dominate. The surface plasmon waves can be optically excited by resonant coupling. The condition for resonance is strongly dependent on the refractive indices and thickness of the media near to the metal-insulator interface. The intensity of the light wave can be modulated by coupling the light wave with the surface plasmon wave. Generally, if coupling between the surface plasmon wave and the light wave is strong, the attenuation of the emitted light wave is strong, and, if coupling is weak, there occurs almost no attenuation of the emitted light wave.

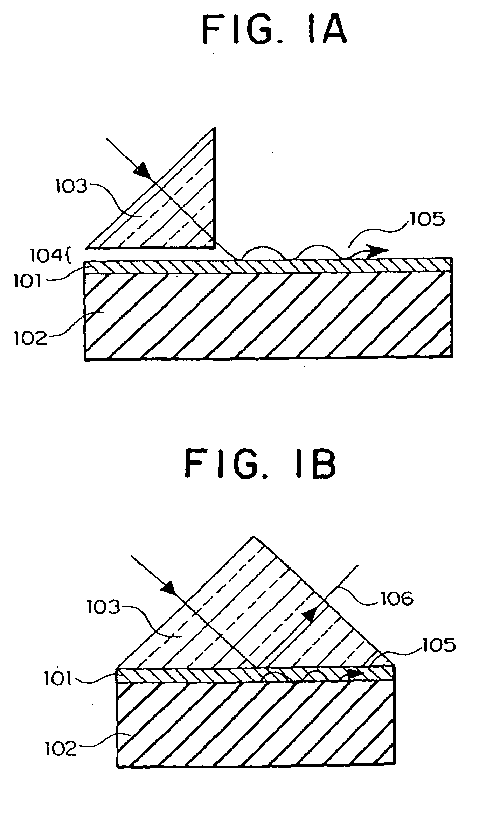

Previously proposed arrangements, which it is believed will be helpful in understanding the present invention will now be described with reference to Figs. 1 to 6 of the accompanying drawings.

Attenuated total reflection (ATR) effect has been utilized to optically excite surface plasmon waves through a high-index prism. Light, traveling in free-space, is sent towards the metal-insulator interface through the prism with an angle larger than the critical angle, producing an evanescent wave field which may overlap the surface plasmon wave field. If the propagation constant Kev of the evanescent wave is in harmony with the propagation constant Ksp of the surface plasmon, the surface plasmon resonance is excited on the metal surface. Two configurations are mainly used for optically exciting the surface plasmon wave. The first is Otto's ATR configuration. This Otto's configuration is shown in Fig. 1A. In this Otto's configuration, there exists a small air gap between a metal medium layer 101 on a thick insulator 102 and a high-refractive index prism 103. A surface plasmon wave 105 is optically excited by the incident light. Further, the second configuration used to optically excite surface plasmon waves is Kretschmann's modified ATR configuration as shown in Fig. 1B. In this configuration, a thin metallic foil 101 is inserted between the prism 103 and the insulator 102. Surface plasmon waves 105 are also optically excited by absorbed light which will not be reflected light 106. This configuration is more practical since there is no air gap. It is noted that the high-refractive index prism 103 for generating the evanescent wave may be a diffraction grating with a period smaller than the wavelength of the incident light, or other similar optical components.

Here, when a prism is used as an optical component, the propagation constant (wave number) $K_{ev}$ of the evanescent wave is represented by the following equation (1):

$$K_{ev} = n(\omega) \cdot K_0(\omega) \cdot \sin\theta$$

$$= n(\omega) \cdot \omega/c \cdot \sin\theta \qquad (1)$$

$$= n(\lambda) \cdot 2\pi/\lambda \cdot \sin\theta$$

where c is the speed of light in vacuum, $\omega$ is the angular frequency, $\lambda$ is the wavelength, $n(\omega)$ and $n(\lambda)$ are the refractive indices of the prism in the case of an angular frequency w and a wavelength $\lambda$, respectively, $K_0(\omega)$ is the wave number in the case of an angular frequency $\omega$ in vacuum, and $\theta$ is the incident angle of light with respect to the underside of the prism. Therefore, the wave number of the evanescent waves can be harmonized with the propagation constant of the metal surface plasmon by adjusting the refractive index $n(w)$ or $n(\lambda)$ of the prism and the incident angle $\theta$ of light.

On the other hand, the propagation constant Ksp of the surface plasmon is given by the following equation (2), where the angular frequency of the surface plasmon is $\omega$, and the dielectric indices of the metal and the dielectric indices of the low-index medium in contact with the metal are respectively em and $\varepsilon 0$,

$$Ksp = \frac{\omega}{c} \cdot \sqrt{\frac{\varepsilon_m(\omega) \cdot \varepsilon_0}{\varepsilon_m(\omega) + \varepsilon_0}}$$

$$= \frac{2\pi}{\lambda} \cdot , \sqrt{\frac{\varepsilon_m(\lambda) \cdot \varepsilon_0}{\varepsilon_m(\lambda) + \varepsilon_0}} \qquad (2)$$

where $\varepsilon m(\omega)$ and $\varepsilon(\omega)$ are the dielectric indices of the metal in the cases of an angular frequency $\omega$ and a wavelength $\lambda$, respectively. Here, since em is a complex number, the propagation constant Ksp is also a complex number. The evanescent waves generated by using a prism when Kev = Ksp generates the surface plasmon. In order to excite strongly the metal surface plasmon, the metal surface plasmon itself must be a wave with a long life. That is, it is required that the imaginary part of the propagation constant Ksp is small, and the attenuation associated with propagation is small.

The imaginary part of the propagation constant Ksp is approximatively solved, assuming that the respective complex numbers are Ksp = Ksp' + iKsp", and em =em' + iem" e, to be precise, depends on the angular frequency or the wavelength), yielding the following expression (3):

$$k_{sp}'' \approx \frac{\omega}{c} \cdot \left( \frac{\varepsilon_m(\omega)' \cdot \varepsilon_0}{\varepsilon_m(\omega)' + \varepsilon_0} \right)^{3/2} \times \frac{\varepsilon_m(\omega)''}{2(\varepsilon_m(\omega)')^2}$$

$$\approx \frac{2\pi}{\lambda} \cdot \left( \frac{\varepsilon_m(\lambda)' \cdot \varepsilon_0}{\varepsilon_m(\lambda)' + \varepsilon_0} \right)^{3/2} \times \frac{\varepsilon_m(\lambda)''}{2(\varepsilon_m(\lambda)')^2} \qquad (3)$$

Therefore, the factor which decides the intensity of the metal surface plasmon is $\varepsilon m'' / (\varepsilon m')_2$ (e, to be precise, depends on the angular frequency or the wavelength), and the metal to excite the metal surface plasmon is desirably a metal whose value of $|\varepsilon m'' / (\varepsilon m')_2|$ is small. Specifically, silver (Ag), gold (Au), copper (Cu), aluminum (Al) and the like are usable.

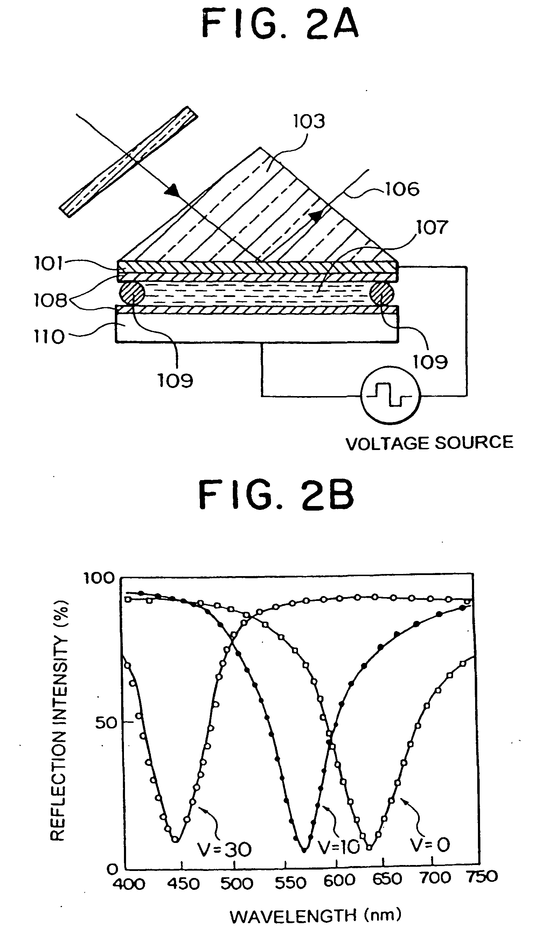

In the specification of U.S. patent number 5,451,980 there has been proposed a liquid crystal display device, and in the specification of U.S. patent number 5,570,139 there has been proposed a projector, each of which selects a wavelength based on an electric field using a material whose refractive index varies with the application of an electric field such as a liquid crystal as a low-index dielectric to provide a display utilizing surface plasmon. An example of the publication of the device at an academic meeting is shown in "Appl. Phys. Lett.", U.S., 1995, vol. 67, No. 19, at pp. 2759 to 2761. In this publication, as shown in Fig. 2A, there is illustrated a device whereby the absorption wavelength is made variable, and the wavelength region of the reflected light is electrically changed using a liquid crystal. Further, Fig. 2B shows the measurements (a broken curve) and the calculated results (solid curve) of the characteristics of the reflected light intensity with respect to wavelengths when the voltage value in the aforesaid device is varied. In this device, a $60°$ $SF_6$ glass prism is used as a prism 103, and a 50-nm silver thin film is evaporated thereon as a thin metal film 101. A 50-nm $MgF_2$ layer is then evaporated at a $50°$ oblique angle on to the silver film as an alignment layer 108. A substrate 110 is so configured that the same alignment layer 108 is obliquely evaporated on to an ITO film, which is a transparent electrode formed on a glass substrate. A 4-$\mu$m cell gap is ensured by spacers 109, and then filled with BL009 manufactured by Merck KGaA as a liquid crystal 107. As shown in Fig. 2A, a white light is incident on the device through a sheet polarizer as a p- and linearly polarized light, and a voltage is applied thereto to determine the dependence of the reflected light on the wavelength. The results are shown in Fig. 2B. At a voltage of 0 V, there is an absorption maximum in the vicinity of 640 nm. The absorption maximum shifts towards the lower wavelengths with the application of a voltage. At 10V, it is at 560 nm, and at 30 V, it is at 450 nm. The measured results are in good agreement with the calculated results.

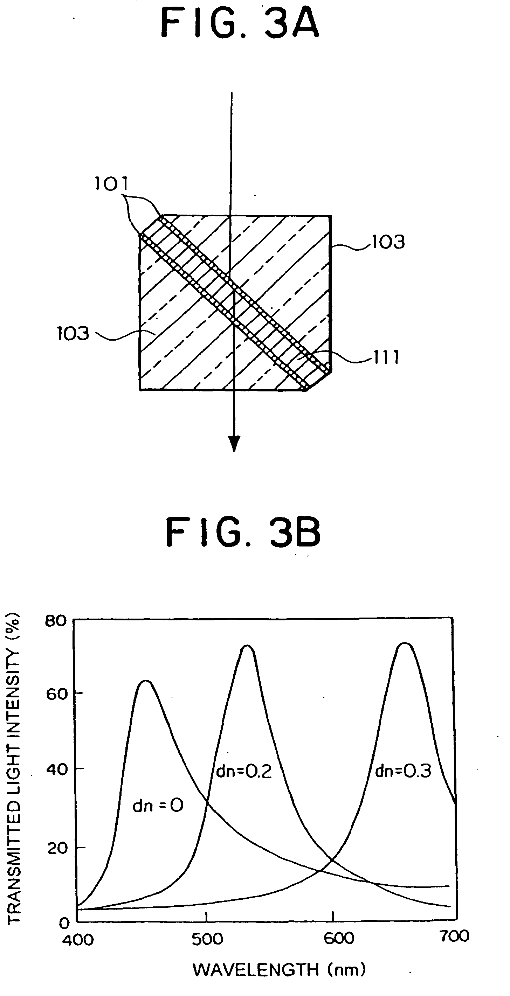

Further, there is a technique using the re-radiation of the absorbed light. As an example of this technique, a description will be given of the technique described in "SID 97 DIGEST" U.S., 1997, pp. 63-66. Fig. 3A is a cross sectional view of a device for obtaining transmitted light in a specific wavelength range by implementing the Kretschmann method in a symmetrical structure. Fig. 3B is a diagram showing the calculated results of the transmitted light intensity with respect to the wavelength when the refractive index of the central medium is changed in the device. This device is considered in the same way as the one obtained by removing the substrate 110 side, and providing a structure identical with the upper side structure on the lower side in symmetrical relation to the device having the structure shown in Fig. 2A. However, the film thickness of the electro-optical material 111 of the central part is much thinner compared to that of the device of Fig. 2A. This symmetrical structure and the very thin central electro-optical material 111 enable the surface plasmon wave generated at the interface on the incident side to be coupled to the surface plasmon wave at the next interface with the metal to generate another surface plasmon wave on the outgoing side. This surface plasmon wave re-radiates the light with the same wavelength. In this manner, it is possible to re-radiate the absorbed light. Fig. 3B shows theoretical calculated results when the anisotropic refractive index dn of the central material is changed from 0 to 0.2, and 0.5 in this device. When the dn is 0, the device radiates light at a wavelength of 450 nm. With dn at 0.2 and 0.5, light at respective wavelengths of 530-nm and 650-nm are radiated. Since surface plasmon is a surface effect, the film thickness of the central material is arranged to be very thin, or about one wavelength in order to effect such re-radiation. When a liquid crystal material is used as the central material, it is considered that the response speed can be about two orders of magnitude faster than the response speed of a conventional liquid crystal device, because of the thinness of the film.

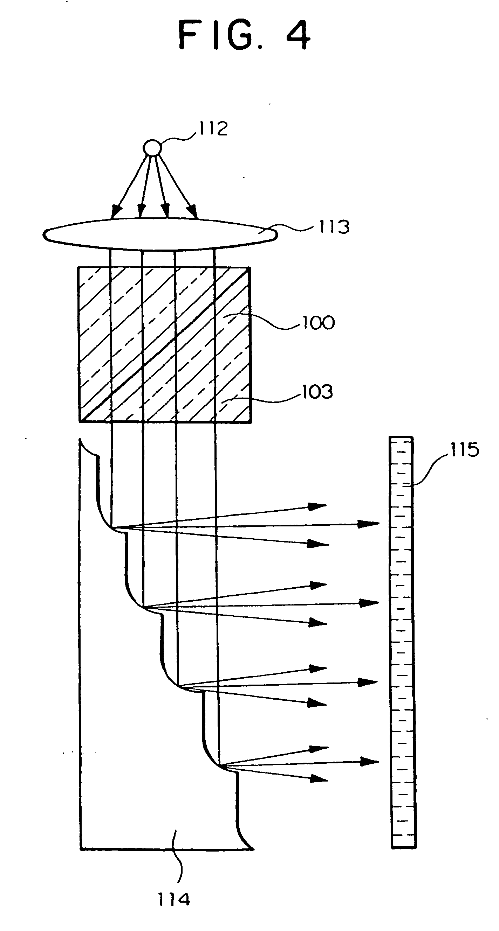

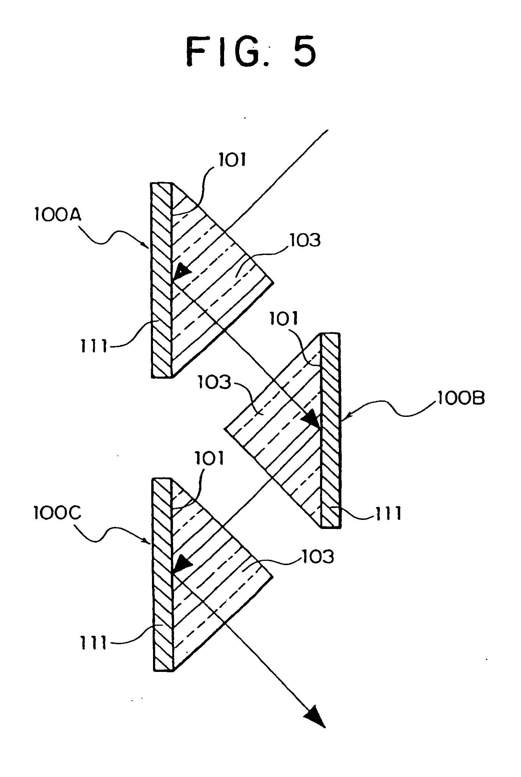

Furthermore, as another example of a technique described in the last mentioned publication, reference is now made to Fig. 4 which shows an example of the configuration of a direct-view type liquid crystal display apparatus for performing a field sequential display utilizing surface plasmon. Here, one device of Fig. 3A is used as a device 100. The light from a line source 112 is incident through a cylindrical lens 113 on to the device 100, and one colour of the three primary colours of light is selected for each time period. The light is applied on to the whole surface of a liquid crystal panel 115 by a reflector 114 having a stepped surface to permit field sequential display. The technique described in the specification of U.S. Pat. No. 5,570,139, provides an example of a light source for a liquid crystal display device using a surface plasmon and will be described with reference to Fig. 5. White light is applied from the upper right to be sequentially incident on a plurality of (three) unit devices 100A, 100B, and 100C. Thus, the outgoing light therefrom establishes itself as a light source. At the respective unit devices 100A, 100B, and 100C, light beams of specific wavelength ranges, i.e., blue, green, and red light beams are individually absorbed to obtain respective colours of yellow, magenta, and cyan. This cycle is repeated in the three devices to obtain a light of a prescribed colour.

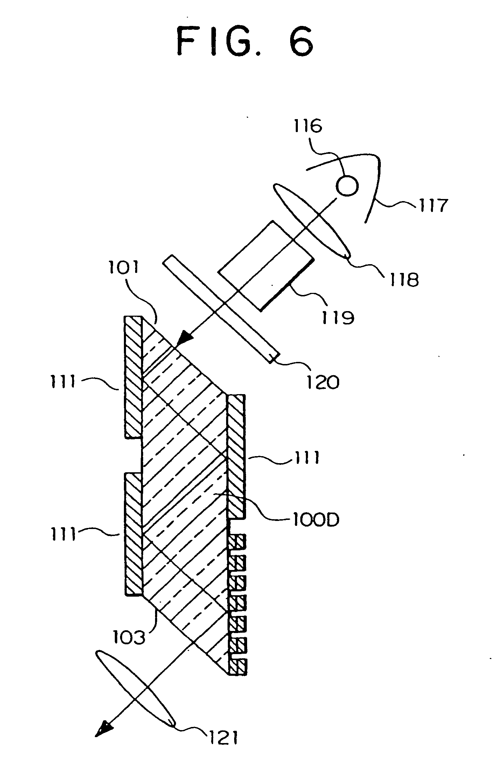

On the other hand, as an example in which it is proposed that surface plasmon be used for a projector, there is a technique which is shown in "SPIE", vol. 3019, pp. 35-40 (1997). Fig. 6 is a cross sectional view of an example of the projector utilizing surface plasmon according to this technique. A central surface plasmon device 100D has almost the same structure as the one shown in Fig. 5, except that the prisms 103 of Fig. 5 are integrated into one unit. There are placed a lamp 116, a reflector 117, a relay lens 118, an integrator 119, and a sheet polarizer 120 on the incident side. On the other hand, there is provided a reflection type liquid crystal display apparatus or the like, not shown, which performs monochrome modulation through a projection lens 121 to obtain an image on the outgoing side, thus providing an image display. The light from the lamp is collected in one direction by the reflector, and then brought close to a parallel beam in a narrow region by the relay lens and the integrator. The light beam is then aligned into either polarized light by the sheet polarizer, and the selection of colour and image display are carried out at the surface plasmon device. Finally, the image is projected through the projection lens. The projection can be accomplished based on a field sequential display.

Further, in Japanese Laid-open Patent Publication No. Hei 5-313108, there is disclosed a light modulator in which a metal-insulator interface is formed adjacent to a planar wave guide for carrying a light wave. With the light modulator, a high frequency voltage applied to the interface causes the insulator to resonate, generating a surface plasmon wave on the interface. The resulting wave is coupled to a gradually vanishing light wave in the wave guide, thus changing the intensity of the light wave.

The foregoing light modulators, especially, the light modulator using surface plasmon, and a display apparatus using the same, encounter the following problems. The first problem lies in that the structure is complicated. This is attributable to the fact that, in the previous proposals, three unit devices each having a wavelength variable by an electric field are required for simultaneously obtaining light beams of the three primary colours in specific wavelength ranges. The second problem lies in that the loss of light is high. The reason for this is that there is used only the reflected light from which light has been absorbed by the surface plasmon, or the re-radiated light of the absorbed light. Therefore, the whole of the light is not used which results in a loss. For example, with the technique of Fig. 4, during the period in which one colour produced by the field sequential display is displayed, the other two colours of the three primary colours are not used at all. The third problem lies in that there exists no light modulator capable of ensuring a division both temporally and spatially.

Colour sequential illumination devices which overcome most of these problems are known from Yu Wang: "Scrolling colour projection display using surface plasmon tunable filters", Projection Displays, Jan. 1998, Proceedings of the SPIE, Vol. 3296, pages 149-153, 1998, which discloses a light modulator for displays comprising surface plasmon tunable filters (SPTF).

Yu Wang: "Surface plasmon tunable filters and flat panel display device", Flat Panel Display Technology and Display Metrology, Jan. 1999, Proceedings of the SPIE, Vol. 3636, pages 69-72, 1999 (which discloses that SPTFs can be used for colour sequential illumination devices), and EP 0395986 (which discloses that light waves can be coupled to the surface plasmon waves by prisms or gratings) also suggest devices which overcome most of the above problems.

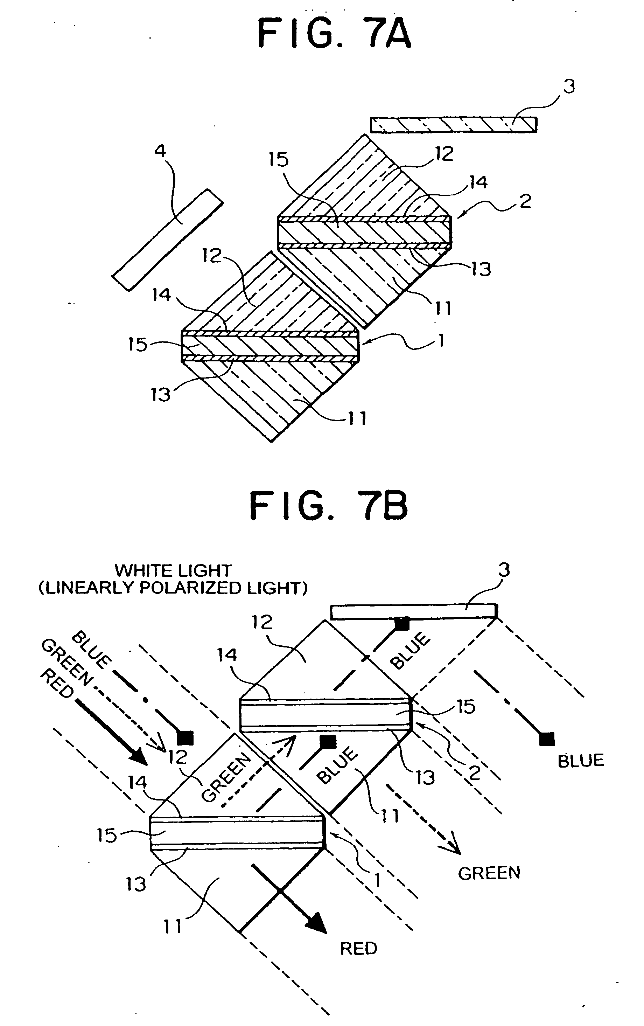

Features of arrangements to be described below, by way of example in illustration of the invention with reference to Figs. 7 to 16 of the accompany drawings are the provision of a light modulator with a simplified structure, a light modulator whereby the loss of light is minimized, and a light modulator which is capable of ensuring division both temporally and spatially. Further features illustrative of the present invention are the provision of a display apparatus using the aforementioned light modulator, and a display method therefor.

The present invention relates to a light modulator utilizing surface plasmon generated at the interface between a thin metal film and an electro-optical material. A particular arrangement not in accordance with the invention has two unit devices, and a mirror, the two unit devices, each having a pair of prisms individually provided with thin metal films at their respective undersides, in which the thin metal films are oppositely disposed, and an electro-optical material sandwiched between the oppositely disposed thin metal films, in which the two unit devices are disposed in parallel to each other such that respective surfaces of the prisms of the unit devices are in contact with each other so as to ensure the arrangement of the thin metal films in a parallel relation to each other, and the mirror is disposed such that the mirror side thereof faces a direction in parallel with the thin metal films, and extends along the top of the prism of one unit device on the side thereof not in contact with another unit device. An air gap is employed in place of the electro-optical material according to the invention. The thickness of the air gap can be changed by a piezo material provided between the prisms constituting the unit device. Further, it is possible to employ a diffraction grating in place of the prism. Furthermore, it is possible to configure a light source, or a liquid crystal display apparatus or a liquid crystal projector, by utilizing the aforementioned light modulator.

With a light modulator to be described in illustration of the present invention, the maximum amount of the incident light can be utilized in the final outgoing light with a minimum of loss by making both of the transmitted light due to absorption and re-radiation generated by the unit device and the reflected light into the outgoing light, the light incident on the next unit device, or the light incident on the mirror. Further, the colour of light can be spatially divided. Still further, it can also be divided temporally by changing the wavelength by means of a voltage.

The following description discloses, with reference to Figs. 7 to 16 of the accompanying drawings, by means of examples, the invention which is defined in the appended claims, whose terms determine the extent of the protection conferred hereby.

In the drawings:-

FIGS. 1A and 1B are illustrative diagrams of a previously proposed surface plasmon wave generator by Otto and a surface plasmon wave generator by Kretschmann, respectively,

FIGS. 2A and 2B are, respectively, a cross sectional view of the configuration of a device whereby the absorption wavelength is made variable by using a known liquid crystal and the wavelength range of the reflected light is electrically changed, and a graph showing the measured and calculated results of the reflected light intensity characteristics with respect to the wavelength when the voltage value is changed in this device,

FIGS. 3A and 3B are, respectively, a cross sectional view of a device implementing the Kretschmann method in a symmetrical structure to obtain the transmitted light within a specific wavelength range, and a graph showing the calculated results of the transmitted light intensity with respect to the wavelength when the refractive index of the central material is changed in this device,

FIG. 4 is a view of the configuration of a direct-view type liquid crystal display apparatus for providing a field sequential display utilizing a known surface plasmon,

FIG. 5 is a view showing an example of a light source for a previously proposed liquid crystal display device utilizing surface plasmon, and

FIG. 6 is a view of the configuration of one example of a previously proposed projector utilizing surface plasmon.

FIGS.7A and 7B are diagrammatic sectional views illustrating a first configuration,

FIGS. 8A to 8C are diagrammatic sectional views illustrating a second configuration,

FIGS. 9A to 9C are diagrammatic sectional views illustrating a third configuration,

FIG. 10 is a diagrammatic sectional view showing a fifth configuration,

FIG. 11 Is a diagrammatic sectional view showing a sixth configuration,

FIGS. 12A and 12B are graphs showing the characteristics of a filter of the sixth configuration,

FIG. 13 is a graph for use in describing a driving method in a seventh configuration,

FIGS. 14A and 14B are graphs showing the spectral characteristics in an eighth configuration,

FIGS. 15A to 15C are diagrammatic part-sectional views for use in describing the operation of a ninth configuration, and

FIGS. 16A and 16B are graphs showing the intensity of spatially divided light in an eleventh configuration.

As shown in FIG. 7A, the apparatus of the first configuration includes first and second unit devices 1 and 2 each implementing the Kretschmann method in a symmetrical structure, and one mirror 3. If required, a device for aligning the polarization direction in one direction may be added. Here, a polarization conversion device 4 is provided in a light incident path. The first and second unit devices 1 and 2 each implementing the Kretschmann method in a symmetrical structure are so configured that the respective inclined surfaces of two prisms 11 and 12, each having a right triangle cross section, are oppositely disposed, and thin metal films 13 and 14 are respectively formed on the inclined surfaces. Further an electro-optical material 15 whose refractive index varies in accordance with the electric field strength is inserted between the oppositely disposed thin metal films 13 and 14. The first and second unit devices 1 and 2 are arranged in a parallel relation to each other with a respective surface of each of the prisms substantially in contact with each other. As a result, each underside of the prisms 11 and 12 and the thin metal films 13 and 14 are arranged in a parallel relation to one another. At the same time, the surface side of the mirror 3 is also disposed so that it is parallel to the aforesaid parallel plane, and one end thereof is substantially in contact with the top of the prism of the second unit device 2 on the side thereof not in contact with the first unit device 1. Further, the polarization conversion device 4 is disposed at the incident light side position of the first unit device 1 not in contact with the mirror 3, i.e., at a position opposing the side of the prism 12 not in contact with the second unit device 2.

FIG. 7B is a diagram suitable for use in illustrating the operation of the apparatus of the first configuration. It is a diagram schematically showing how the light beams of three primary colours of R, G, and B (red, green, and blue) are transmitted. The white light which has been converted into linearly polarized light by the polarization conversion device 4 is incident on one surface of the prism 12 of the first unit device 1, and reaches the thin metal film 14. Here, at a certain time, the first unit device 1 on the incident side absorbs red light, and re-radiates it. Therefore, red light is emitted. The reflected light including the other green and blue light is incident on the second unit device 2. At the second unit device 2, the light reaches the thin metal film 13 through the prism 11, and blue light is absorbed, and re-radiated. Therefore, green light is emitted as reflected light. Further, blue light passes through the second unit device 2, and then it is reflected by the mirror 3, and emitted therefrom. Thus, white light is spatially divided in the order of red, green, and blue. Further, the refractive index of the electro- optical material 15 is changed by individually applying to the first unit device 1 and the second unit device 2 a voltage. Therefore it is possible to change the wavelength of the light to be absorbed and re-radiated. For example, in the case in which green and red are absorbed and re-radiated at the first unit device 1 and the second unit device 2, respectively, the white light is spatially divided in the order of green, blue, and red. The spatially divided light can also be divided temporally by performing temporal switching in this manner. The loss of light is also very low. Especially with the insertion of the polarization conversion device 4 for aligning non-polarized light with linearly polarized light on the incident side there is almost no loss of light.

In the second configuration, a liquid crystal material is used as the electro-optical material 15 whose refractive index varies with the electric field of the arrangement of the first configuration. In this case, an alignment layer is formed for aligning the liquid crystal material, as required. The operation of the second configuration is similar to that of the first configuration. The liquid crystal alignment of the liquid crystal material serving as the electro-optical material 15 is changed by the application of a voltage, and the refractive index of the liquid crystal material changes due to the anisotropic refractive index which the liquid crystal has. Consequently, it is possible to change the wavelength by means of a voltage. Especially noteworthy is the following fact. Since the liquid crystal material region is a very thin film with a thickness of about one wavelength, switching is done based not on the bulk of the material, but based on only the surface of the material. Accordingly, a response can be obtained which is about two orders of magnitude faster than by using the usually employed liquid crystal material. Consequently, a light modulator capable of giving a comparatively fast response can be obtained.

For example, referring to FIG. 7, prisms of 60° $SF_6$ glass (manufactured by Shott Co., Germany) are used as the prisms 11 and 12 of the first and second unit devices 1 and 2, and silver thin films are evaporated thereon as the thin metal films 13 and 14. Further, $MgF_2$ is obliquely evaporated thereon as an alignment layer, which is not shown. A liquid crystal is sandwiched as the electro-optical material 15 between the prisms 11 and 12. Thus, the prisms 11 and 12 are joined together without using an adhesive. The thin metal films 13 and 14 are wired so as to enable a voltage to be applied to them. The first and second unit devices 1 and 2 are each thus configured and are optically cemented to each other using a matching oil with a refractive index of 1.805, almost the same as that of $SF_6$. Further, a mirror 3 is included. The light from a white light source is shone thereon through a sheet polarizer serving as the polarization conversion device 4. The light is then spatially divided into red, green, and blue by applying a voltage via the wiring, i.e., between the thin metal films 13 and 14. Further, it is possible to achieve temporal switching by adjusting the voltage value. It is also possible to provide high-speed switching in the order of (1) red, green, and blue, (2) green, blue, and red, and (3) blue, red, and green.

In this case, one of the prisms 11 or 12 at least has a rutile crystal structure obtained by heating titanium oxide. The refractive index is about 2.8. The first and second unit devices 1 and 2 are made using the prisms, and are arranged in a parallel relation to each other, and the mirror 3 is included. There is also provided a polarization conversion device 4 for converting non-polarized light into p-polarized light. With such a configuration, the efficiency is enhanced by the effects of the polarization conversion device and the use of the high refractive index prisms much more than with the previously described configuration. Further, although consideration was also given to the case in which FDS1 glass of HOYA Co., with a refractive index of about 1.92 was used, the efficiency using the rutile prism was found to be higher.

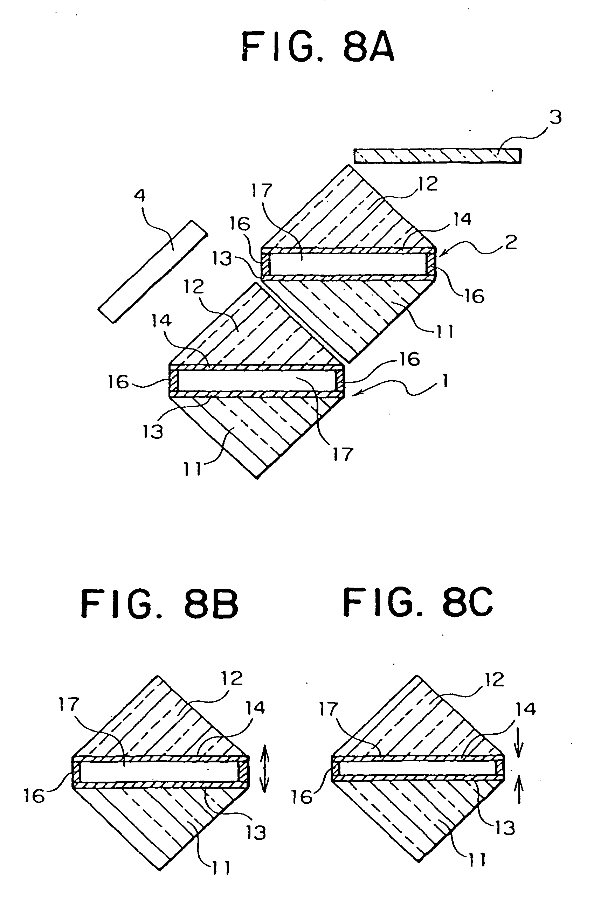

In the third configuration illustrative of the present invention, an air gap is provided in place of the material 15 whose refractive index varies with the electric field of the first configuration, and the material exhibiting the piezoelectric effect is placed at either end or at both ends of the space between the opposing prisms 11 and 12. FIG. 8A is a diagram showing the configuration of the third configuration. Piezo materials 16 are disposed respectively on both ends of the space between the prisms 11 and 12 in place of the electro-optical material 15 provided in the first configuration, and thus, there is an air gap 17 between the prisms 11 and 12 provided by the piezo materials 16.

FIGS. 8B and 8C are diagrams for use in describing the operation of the third configuration, in which, as distinct from the first and second configurations, the application of a voltage changes not the refractive index, but the thickness of the air gap 17. The application to the piezo materials 16 of a voltage causes distortion according to the voltage value. As a result, elongation, as shown FIG. 8B, or shrinkage, as shown in FIG. 8C, occurs, thereby making it possible to change the thickness of the air gap 17. The coupling conditions for the surface plasmon are changed by utilizing this property to obtain the same effects as in the first and second configurations. The advantage of this method is that, since the region of the air gap 17 has a lower refractive index than a liquid crystal as compared with the case where the liquid crystal is used, the prisms 11 and 12 are not required to have high refractive indices. This is advantageous in achieving a lower cost.

A specific example of the third configuration includes the use of zinc oxide (ZnO) which enables a thinner film for the material having the piezoelectric effect to be achieved more easily. The device of this arrangement can be manufactured in the same manner, as in the second configuration, except that a liquid crystal is not used, and the following process is employed for using the piezo material. Thin films 16 of zinc oxide are formed and patterned on both ends of the silver thin film 13 on each prism 11 of the unit devices 1 and 2. Then, a silver paste is applied thereon in a very small amount by means of a control type dispenser to be joined together with the side of the prism 12 on which the silver thin film 14 is formed. Thus, the air gap 17 is formed between respective silver thin films 13 and 14 of the prisms 11 and 12 by the zinc oxide thin film 16. It is noted that the mirror 3 and the polarization conversion device 4 are used. This specific example can provide the same high efficiency as in the specific example of the first configuration. Further, in the third configuration, zinc oxide is used as the piezo material, but any material can be employed as long as they can be formed into sufficiently thin films. For example, even with aluminum nitride (AIN), a good thin film can be formed by means of a magnetron sputtering method or a dual beam sputtering method. Alternatively, with zinc oxide, a better thin film can be obtained by means of an ECR plasma sputtering method. Furthermore, a comparatively thin film can also be achieved with a PZT system.

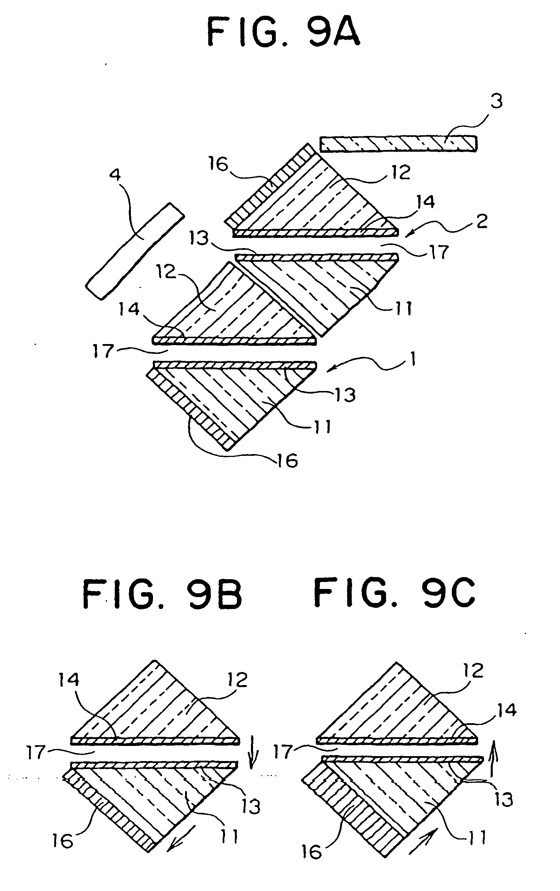

In the fourth configuration illustrative of the present invention, there is used the material exhibiting a piezoelectric effect in the same manner as in the third configuration. However, as shown in FIG. 9A, only an air gap 17 is provided in place of the electro-optical material 15 in the first configuration. Materials 16 exhibiting a piezoelectric effect are respectively placed on the surfaces of the respective prisms 11 and 12 of the unit devices 1 and 2 through which light of incidence, transmission, reflection, or the like will not pass. In this fourth configuration, the thickness of the air gap is varied in the same manner as in the third configuration. The application to the piezo materials 16 of a voltage causes distortion according to the value of a voltage. As a result, elongation, as shown FIG. 9B, or shrinkage, as shown in FIG. 9C, occurs, thereby making it possible to change the thickness of the air gap 17 between the prisms 11 and 12. The advantages of this method are as follows. In addition to the advantage of the third configuration, the piezo material 16 is not required to be formed into a thin film, and when disposed on the whole surface of each prism as shown in FIGS. 9A, 9B, and 9C, patterning accuracy is not required, because patterning is not necessary, resulting in a lower manufacturing cost. Further, the electrode for the piezo material 16 is easy to extract. It is noted that, since the direction of elongation and shrinkage of the piezo material 16 differs from the opposing direction between the prisms 11 and 12, a slight side-to-side movement of the arrangement occurs, but it occurs in a very narrow range, and hence it can be ignored. Further, in this fourth configuration, although the same material as in the third configuration can be used as the piezo material 16, such a reduction in thickness of the film as in the third configuration is not required in this arrangement. Therefore, more varied piezo materials can be used.

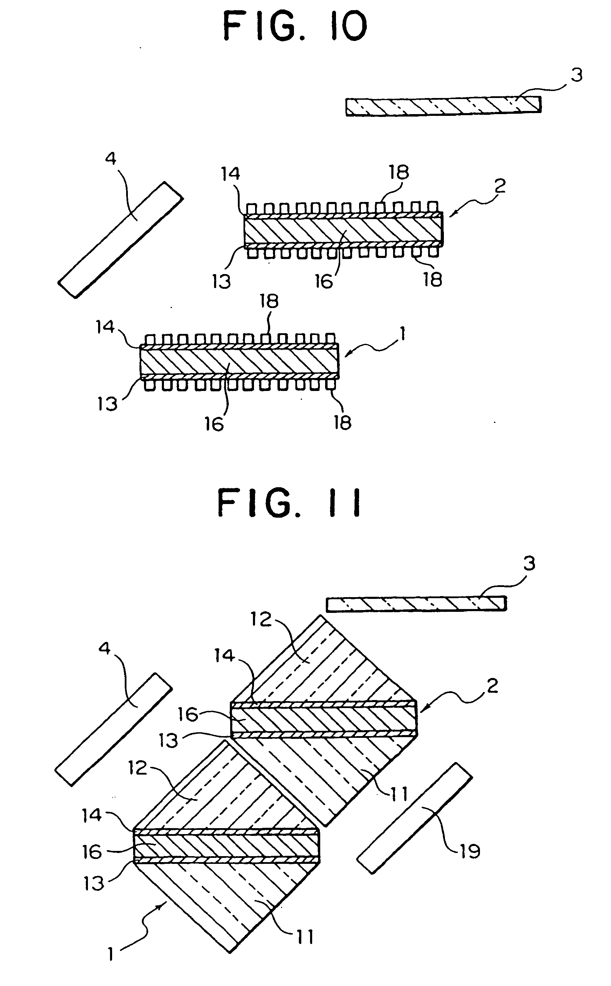

In the fifth configuration, diffraction gratings are used in place of the prisms 11 and 12 of the first to the fourth configurations. As shown in FIG. 10, a diffraction grating 18 is used at each portion on which the prism of the first configuration was placed. That is, thin metal films 13 and 14 are respectively formed on both surfaces of the electro-optical material 15, with a desired thickness. The diffraction gratings 18 are individually disposed on their respective surfaces of the thin metal films 13 and 14. For the diffraction grating 18, a diffraction grating having a shorter period than the wavelength of the incident light is selected. In this arrangement, in accordance with the first to the fourth arrangements, either the electro-optical material, such as a liquid crystal, or a material exhibiting a piezoelectric effect may be used. In this fifth configuration, the same operation as in the first configuration is possible. Furthermore, a particularly large prism is not required. As a result, the whole apparatus becomes compact in size, and there is a reduction in weight.

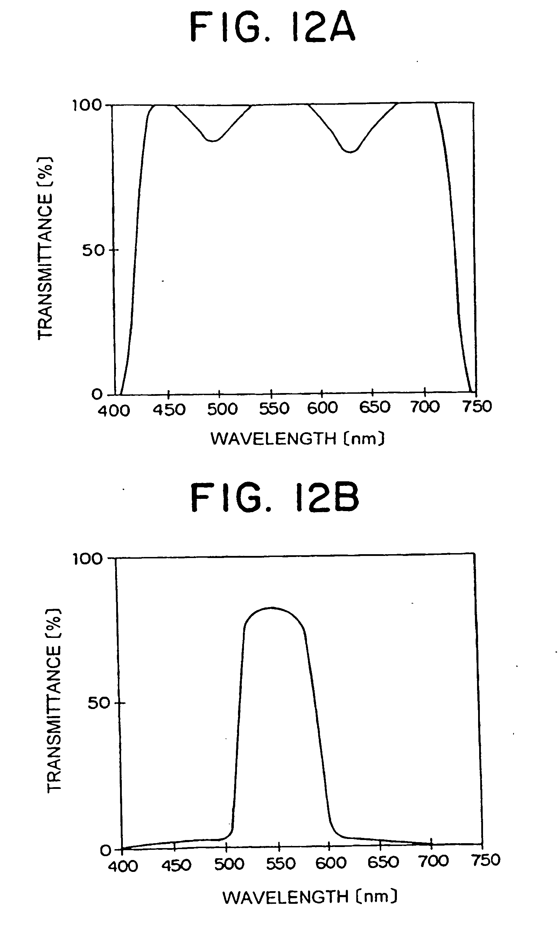

In the sixth configuration, a filter is disposed at the outgoing side of the second unit device used in the first to the fifth configurations. FIG. 11 shows the configuration adapted to the first configuration as the sixth configuration. A filter 19 for improving the wavelength characteristics is arranged at the outgoing side of the second unit device 2. The filter 19 has characteristics that compensate for differences in wavelength range and intensity between the outgoing light which has been absorbed and re-radiated at each unit device and the outgoing light which has undergone only absorption, and has been reflected at the unit device 1 and the unit device 2. The characteristics of the filter 19 are, if required, also the characteristics for cutting the wavelength region wherein absorption will not arise satisfactorily from the surface plasmon absorption under the conditions such as the voltage, film thickness, and refractive index to be used. FIG. 12A shows one example of the characteristics of the filter used in this sixth embodiment. The characteristics are of the absorption and re-radiation close to the characteristics shown in FIG. 8B. It is indicated that the characteristics are for cutting the light within the unnecessary wavelength region included in the light reflected from the second unit device when the light modulator has peaks at wavelengths of 460 nm, 550 nm, and 680 nm. FIG. 12B shows the wavelength characteristics of the outgoing light in each unit space spatially divided when the sixth configuration is implemented. It shows the case where red light and blue light is absorbed and re-radiated at the first unit device 1 and the second unit device 2, respectively, and green light is reflected from the second unit device 2. It is indicated that the unnecessary wavelength region is cut so that the spatial division of colours is satisfactorily achieved.

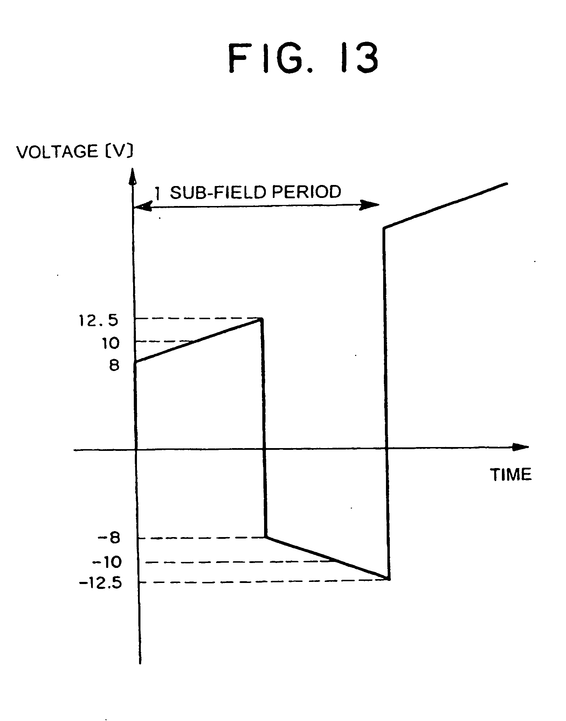

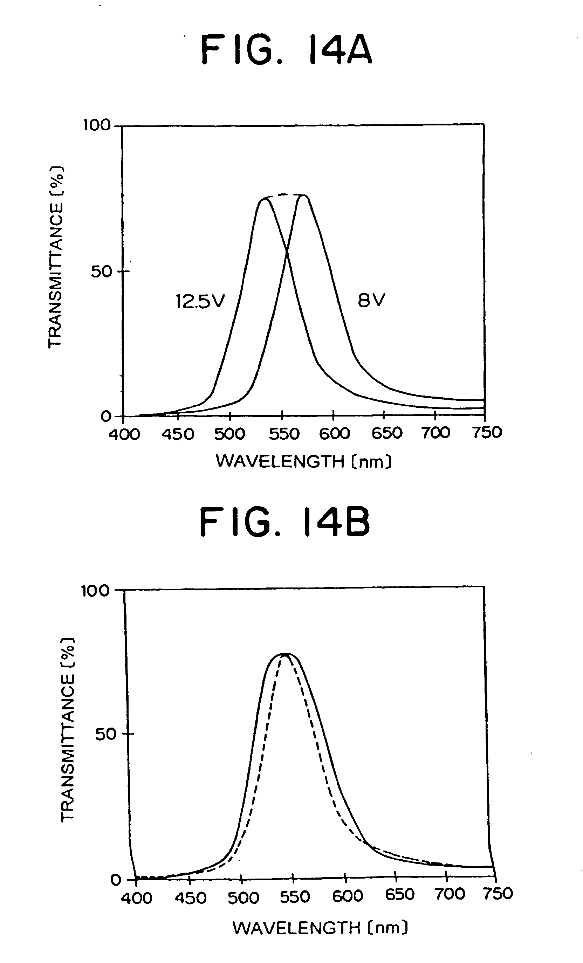

The seventh configuration relates to a method for applying an electric field, i.e., a driving method for use in the first to the sixth configurations. FIG. 13 shows one example of the driving method in the seventh configuration. This example of the driving method includes the feature that it does not set as a constant the wavelength of the light absorbed within the field sequential sub-field time, but shifts it, as shown in the Figure. That is, the amplitude of the voltage to be applied within the sub-field is changed. FIG. 14A is a graph showing the wavelength characteristic range to be shifted by the driving method. FIG. 14B is a graph showing the difference in wavelength characteristics between the case in which the driving method is utilized (solid curve) and the case in which it is not used (a broken curve). With the driving method of this seventh configuration, since the amplitude of the voltage to be applied within the sub-field time is varied, the emitted light corresponds to the time average of the one which has shifted its wavelength characteristics in accordance with the change. Therefore, it is possible to adjust the width of the wavelength region. At the same time, the wavelength region of the light reflected from the second unit device can also be adjusted. In FIG. 14B, although a positive and a negative symmetrical voltage are to be applied on the liquid crystal portion, the application of a voltage of only either polarity is sufficient, whereby problems, such as image persistence, will not occur. Even in the case of the piezo material, the conditions for the applied voltage value differs therefrom, but the implementation is possible in the similar manner.

In the eighth configuration , a compression colour separation light source is configured by using one light modulator of the first to the seventh configurations. Although not particularly shown in this configuration, in the first to the seventh configurations, since the respective first and second unit devices 1 and 2 are capable of dividing light into light beams of different wavelengths, and respectively emitting them therefrom, it is possible to configure the compression colour separation light source. Here, the compression colour separation light source denotes a source of both temporally and spatially divided light, and having a low loss of light. For example, as shown in FIG. 7B, the arrangement can be implemented by a combination of a white light source including light beams covering a large number of wavelength regions, or the like, and the light modulator of the first configuration. Similarly, the arrangement can be implemented by a combination of the white light source, or the like, and any one light modulator of the second to the seventh configurations. The light source of this eighth configuration minimises any loss of light in the field sequential display.

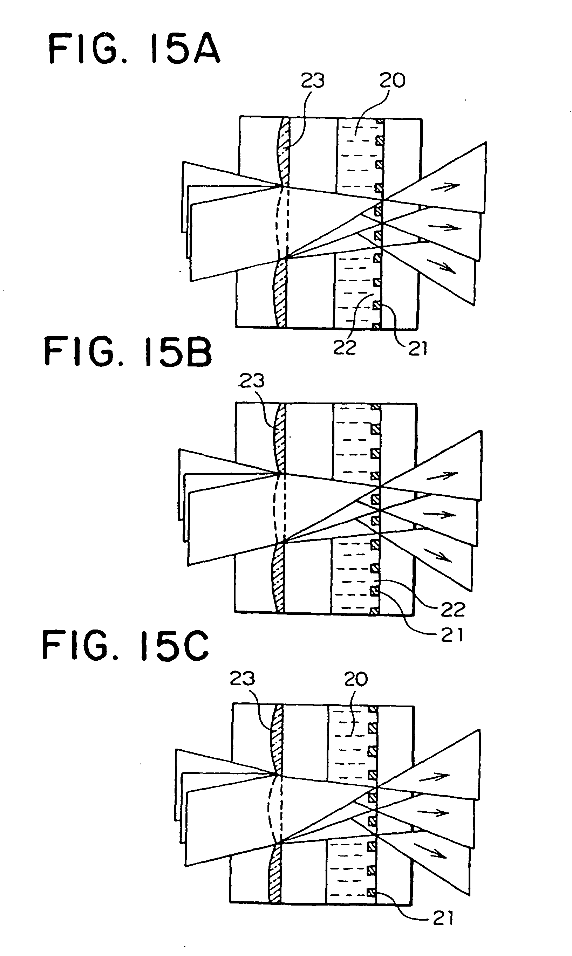

In the ninth configuration, a liquid crystal display apparatus of the field sequential method is configured by using any one light modulator of the first to the seventh configurations, or the compression colour division light source of the eighth configuration. FIGS. 15A to15C are views illustrating a part of the liquid crystal display apparatus of the ninth configuration, and the operation thereof. That is, a liquid crystal 20 of the liquid crystal display apparatus is configured as a liquid crystal panel of the direct-view type, the reflection type, or the projection type. One micro lens 23 is disposed opposite to every set of three aperture portions 22 out of the aperture portions individually defined by the respective light-shielding portions 21 of the liquid crystal 20. Any one light modulator or light source of the first to the eighth configurations is placed at the left-hand side outside the Figure with respect to each micro lens 23. With this configuration, the optical path of light of each divided colour is adjusted by the lens, and the light is to be incident from the left hand side of the Figure. The light enters the liquid crystal layer through each micro lens, and passes through a picture element structure from the aperture portions and the light shielding portions. In a first period, as shown in FIG. 15A, red, blue, and green light are sequentially displayed on their respective pixels, vertically from the highest one. In the next period, green, red, and blue are displayed in this order, as shown in FIG. 15B, and in the final period, blue, green, and red are displayed in this order as shown in FIG. 15C. Repetition of this procedure permits the field sequential display by a method whereby colours are switched individually on each picture element. Consequently, a liquid crystal display apparatus with a relatively low loss of light can be obtained.

In the tenth configuration, a projector is configured on the basis of the first to the ninth configurations. Although not shown, this tenth configuration is implemented by adapting the first to the ninth configurations to a part of the projector apparatus. The operation thereof similar to that described above. The projection type, such as the use of a projector shows a high loss of light, and hence requires a high intensity of the light from the source. Thus, this arrangement has presented problems due to an increase in dissipation power, a reduction in the size of the apparatus, and the like. With the configuration of this arrangement, a projector with a minimum loss of light can be obtained. Further, as a display method with a projector, there are methods using other various apparatuses such as a DMD (digital mirror device) and a TMA (thin film micro-mirror array), other than the method using the liquid crystal display apparatus of the particular ninth configuration described. Further, an arrangement using a large number of these devices is also possible.

The eleventh configuration relates to a method for driving the liquid crystal display apparatus used in the ninth configuration, or the projector used in the tenth configuration. The light beams, which have been spatially divided and emitted, have different intensities for every unit space. This is attributable to the design and manufacturing conditions of the unit device, differences in the reflectance of the mirror, and the optical path difference, and the medium for the optical path, and the like, other than the difference in intensity between the light emitted due to the absorption and re-radiation, and the light emitted due to only double absorption and reflection. Then, the liquid crystal display apparatus or the projector is driven so as to correct the differences by an apparatus for monochrome modulation, or the like to be used therein.

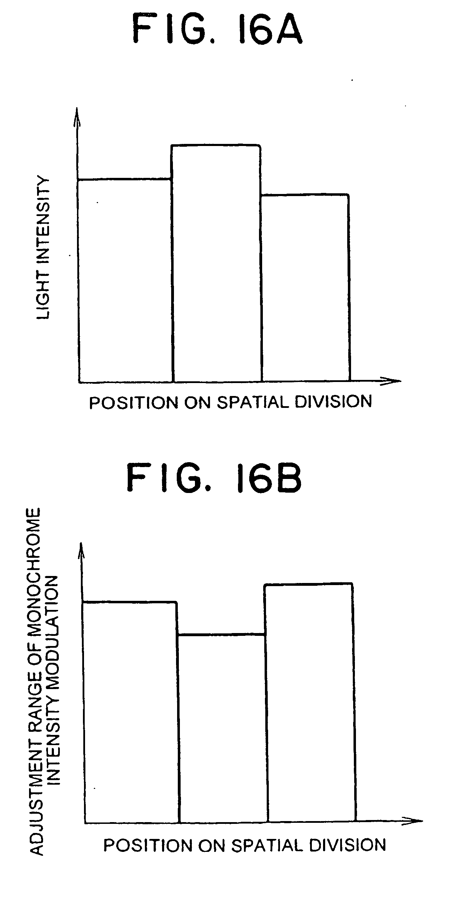

FIGS. 16A and 16B are graphs for use in describing the operation of the eleventh configuration. FIG. 16A shows the intensity of each spatially divided light beam obtained by the light modulator. FIG. 16B shows the range in which the intensity of the monochrome modulation for the characteristics of FIG. 16A is set. The result of the synergistic effect between the characteristics of FIGS. 16A and 16B can be obtained as an actual display. This method can minimise the difference in intensity generated by the light modulator.

As described in the above illustrative configurations, the light modulator has two unit devices utilizing the surface plasmon generated at the interface between a thin metal film and an electro-optical material, and a mirror. Both the transmitted light due to absorption and re-radiation, and the reflected light generated by the unit device are outgoing light, incident light on the next unit device, or incident light on the mirror. Consequently, all light beams can be utilized as the final outgoing light beams with no loss of light. Further, the colour of the light can be spatially divided, and still further, it can also be temporally divided by changing the wavelength by means of a voltage.

Therefore, by means of these arrangements the following effects can be provided. First, since only two unit devices to be applied with an electric field are required, the structure is very simple. Secondly, since both the transmitted light which has been re-coupled by a symmetrical structure and the reflected light are used carefully and effectively, the light can be utilized effectively with a very low loss of light. Thirdly, since the light can be spatially divided into respective wavelength regions by means of the device structure, while it can also be temporally divided as a result of the variance of the wavelength due to the application of an electric field, there can be provided a light modulator capable of performing a division both temporally and spatially. Fourthly, since the refractive index is lowered because of the simplified structure of the apparatus and the use of the piezoelectric effect, costly prisms or costly diffraction gratings become unnecessary, and cheap prisms or cheap diffraction gratings can be used. Therefore, the apparatus can be implemented at a comparatively low cost. Fifthly, since a diffraction grating may be used in place of the prisms, the whole apparatus may be compact in size, and of a reduced weight. Sixthly, since a filter for correcting the wavelength characteristics is used, and the wavelength characteristics are improved by means of the particular driving method, the wavelength characteristics of the emitted light are enhanced.

**Claims**

1. A light modulator using surface plasmon waves generated at the interface between a thin metal film and a dielectric material, including two unit devices (1, 2) and a mirror (3), the two unit devices each having a pair of prisms (11, 12) arranged adjacent each other and provided with thin metal films (13, 14) on adjacent, opposite, faces, with an air-gap (17) between the thin metal film of the opposing adjacent faces, said light modulator also being provided with piezo-electric material (16) arranged so as to allow the air-gap between the metal films to be varied, and wherein said prisms are arranged such that said opposing adjacent faces are parallel so as to ensure that the thin metal films are parallel to each other, and the mirror is disposed such that it is parallel to the thin metal films and arranged to extend from the prism of one unit device on the side thereof which is not adjacent the other unit device.

2. A light modulator according to claim 1, wherein said piezo-electric material is provided in said air-gap.

3. A light modulator according to claim 1, wherein said piezo-electric material is provided on a surface of the prism through which the light to be modulated will not pass.

4. A light modulator as claimed in any one or more of claims 1 to 3, including a diffraction grating (18) in place of a prism.

5. A light modulator as claimed in any one or more of claims 1 to 4, including a device for aligning the polarization direction into one direction, the device being disposed on the incident light side of the other unit device not in contact with the mirror.

6. A light modulator as claimed in any one or more of claims 1 to 5, including a filter for adjusting the wavelength characteristics disposed on the outgoing side of the one unit device.

7. A method for driving a light modulator as claimed in any one or more of claims 1 to 6, including the steps of spatially separating the incident light into light beams of a plurality of wavelengths, and changing the voltage to be applied to the thin metal films.

8. A light source of a compression colour separation system, including a combination of the light modulator as claimed in any one or more of claims 1 to 6 and a source of white light to be incident on the light modulator.

9. A display apparatus including an illumination unit using the light source as claimed in claim 8, which illuminates a liquid crystal panel (20), and a display unit to display an image projected from said liquid crystal panel onto a screen.

10. A method for driving a display apparatus as claimed in claim 9, including the step of driving the display apparatus so as to correct a difference in intensity of optical power on spatial separation due to the light modulator.

**Patentansprüche**

1. Lichtmodulator, bei dem an der Grenzfläche zwischen einer dünnen Metallschicht und einem dielelektrischen Material erzeugte Oberflächen-Plasmonwellen verwendet werden, mit zwei Einheiten (1, 2) und einem Spiegel (3), wobei die beiden Einheiten jeweils ein paar Prismen (11,12) aufweisen, die benachbarten zueinander angeordnet und auf benachbarten, gegenüberliegenden Flächen mit dünnem Metallschichten (13,14) versehen sind, wobei ein Luftspalt (17) zwischen der dünnen Metallschicht der einander gegenüberliegenden, benachbarten Flächen vorhanden ist, wobei der Lichtmodulator ferner mit piezoelektrischen Material (16) versehen ist, das so angeordnet ist, dass der Luftspalt zwischen den Metallschichten variabel ist, und wobei die Prismen derart angeordnet sind, dass die gegenüberliegenden, benachbarten Flächen parallel sind, um sicherzustellen, das die dünnen Metallschichten zueinander parallel sind, und wobei der Spiegel derart angeordnet ist, dass er zu den dünnen Metallschichten parallel ist und sich von dem Prisma der einen Einheit auf der Seite erstreckt, die der anderen Einheit nicht benachbart ist.

**2.** Lichtmodulator nach Anspruch 1, wobei das piezoelektrische Material in dem Luftspalt vorgesehen ist.

**3.** Lichtmodulator nach Anspruch 1, wobei das piezoelektrische Material auf einer Oberfläche des Prismas vorgesehen ist, durch die das zu modulierende Licht nicht hindurch tritt.

**4.** Lichtmodulator nach einem oder mehreren der Ansprüche 1 bis 3, mit einem Beugungsgitter (18) anstelle eines Prismas.

**5.** Lichtmodulator nach einem oder mehren der Ansprüche 1 bis 4, mit einer Einrichtung zum Ausrichten der Polarisationsrichtung, in eine Richtung, wobei die Einrichtung auf der Lichteinfallsseite der anderen Einheit angeordnet ist, die nicht mit dem Spiegel in Kontakt steht.

**6.** Lichtmodulator nach einem oder mehreren der Ansprüche 1 bis 5, mit einem Filter zum Einstellen der Wellenlängencharakteristika, der auf der Ausgangsseite der einen Einheit angeordnet ist.

**7.** Verfahren zum Betreiben eines Lichtmodulators nach einem oder mehreren der Ansprüche 1 bis 6 mit den Schritten zum räumlichen Trennen des einfallenden Lichts in Lichtstrahlen von mehreren Wellenlängen und zum Ändern der an die dünnen Metallschichten anzulegenden Spannung.

**8.** Lichtquelle eines Kompressions-Farbtrennsystems mit einer Kombination des Lichtmodulators nach einem oder mehreren der Ansprüche 1 bis 6 und einer Quelle für auf den Lichtmodulator einzustrahlendes weißes Licht.

**9.** Anzeigevorrichtung mit einer Beleuchtungseinheit unter Verwendung der Lichtquelle nach Anspruch 8, die eine Flüssigkristallanzeige (20) beleuchtet, und mit einer Anzeigeeinheit zum Darstellen eines Bildes, das von der Flüssigkristallanzeige auf einen Schirm projiziert wird.

**10.** Verfahren zum Betreiben einer Anzeigevorrichtung nach Anspruch 9, mit dem Schritt zum Ansteuern der Anzeigevorrichtung zum Korrigieren einer Differenz der Intensität der optischen Leistung bei räumlicherer Trennung durch den Lichtmodulator .

**Revendications**

**1.** Modulateur de lumière utilisant des ondes plasmons de surface générées au niveau de l'interface entre un mince film métallique et un matériau diélectrique, comprenant deux dispositifs unitaires (1, 2) et un miroir (3), les deux dispositifs unitaires ayant chacun une paire de prismes (11, 12) agencés de façon adjacente l'un par rapport à l'autre et pourvus de minces films métalliques (13, 14) sur des faces opposées adjacentes, avec un intervalle d'air (17) entre les minces films métalliques des faces adjacentes opposées, ledit modulateur de lumière étant également pourvu d'un matériau piézoélectrique (16) agencé de telle sorte à permettre une variation de l'intervalle d'air entre les films métalliques, et dans lequel lesdits prismes sont agencés de telle sorte que lesdites faces adjacentes opposées soient parallèles afin de s'assurer que les minces films métalliques soient parallèles l'un à l'autre, et le miroir est disposé de telle sorte qu'il soit parallèle aux minces films métalliques et agencé pour s'étendre à partir du prisme d'un premier dispositif unitaire sur le côté de celui-ci qui n'est pas adjacent à l'autre dispositif unitaire.

**2.** Modulateur de lumière selon la revendication 1, dans lequel ledit matériau piézoélectrique est prévu dans ledit intervalle d'air.

**3.** Modulateur de lumière selon la revendication 1, dans lequel ledit matériau piézoélectrique est prévu sur une surface du prisme à travers laquelle la lumière devant être modulée ne passera pas.

**4.** Modulateur de lumière selon l'une quelconque ou plusieurs des revendications 1 à 3, comprenant un réseau de diffraction (18) à la place d'un prisme.

**5.** Modulateur de lumière selon l'une quelconque ou plusieurs des revendications 1 à 4, comprenant un dispositif pour aligner la direction de polarisation dans une direction, le dispositif étant disposé sur le côté de lumière incidente de l'autre dispositif unitaire qui n'est pas en contact avec le miroir.

**6.** Modulateur de lumière selon l'une quelconque ou plusieurs des revendications 1 à 5, comprenant un filtre pour ajuster les caractéristiques de longueur d'onde, disposé sur le côté sortant du premier dispositif unitaire.

7.  Procédé pour commander un modulateur de lumière selon l'une quelconque ou plusieurs des revendications 1 à 6, comprenant les étapes consistant à séparer spatialement la lumière incidente en faisceaux lumineux d'une pluralité de longueurs d'onde, et à modifier la tension devant être appliquée aux minces films métalliques.

8.  Source lumineuse d'un système de séparation de couleurs par compression, comprenant une combinaison du modulateur de lumière selon l'une quelconque ou plusieurs des revendications 1 à 6 et d'une source de lumière blanche devant être incidente sur le modulateur de lumière.

9.  Dispositif d'affichage comprenant une unité d'éclairage utilisant la source de lumière selon la revendication 8, qui éclaire un panneau à cristaux liquides (20), et une unité d'affichage pour afficher une image projetée à partir dudit panneau à cristaux liquides sur un écran.

10. Procédé pour commander un dispositif d'affichage selon la revendication 9, comprenant l'étape consistant à commander le dispositif d'affichage de sorte à corriger une différence dans l'intensité de la puissance optique sur la séparation spatiale due au modulateur de lumière.

# FIG. IA

# FIG. IB

# FIG. 2A

VOLTAGE SOURCE

# FIG. 2B

# FIG. 3A

# FIG. 3B

# FIG. 4

# FIG. 5

# FIG. 6

# FIG. 7A

# FIG. 7B

WHITE LIGHT
(LINEARLY POLARIZED LIGHT)

# FIG. 8A

# FIG. 8B

# FIG. 8C

# FIG. 9A

# FIG. 9B

# FIG. 9C

# FIG. 10

# FIG. 11

# FIG. 12A

# FIG. 12B

# FIG. 13

# FIG. 14A

# FIG. 14B

# FIG. 15A

# FIG. 15B

# FIG. 15C

26

# FIG. 16A

POSITION ON SPATIAL DIVISION

(y-axis: LIGHT INTENSITY)

# FIG. 16B

POSITION ON SPATIAL DIVISION

(y-axis: ADJUSTMENT RANGE OF MONOCHROME INTENSITY MODULATION)